# EUROPEAN PATENT SPECIFICATION

(11) **EP 2 985 806 B1**
(45) Date of publication and mention of the grant of the patent: **20.11.2019**
(21) Application number: 15180236.0
(22) Date of filing: 07.08.2015
(51) Int. Cl.: H01M 2/02, H01M 10/04, B29C 65/08, B23K 101/36, H01M 10/0587, H01M 2/26, B23K 20/10

(54) **ULTRASONIC WELDING DEVICE, MANUFACTURING METHOD OF RECHARGEABLE BATTERY USING THE SAME, AND RECHARGEABLE BATTERY**
ULTRASCHALLSCHWEISSVORRICHTUNG, HERSTELLUNGSVERFAHREN EINER WIEDERAUFLADBAREN BATTERIE DAMIT SOWIE WIEDERAUFLADBARE BATTERIE
DISPOSITIF DE SOUDAGE PAR ULTRASONS, PROCÉDÉ DE FABRICATION DE BATTERIE RECHARGEABLE UTILISANT CELUI-CI ET BATTERIE RECHARGEABLE

(30) Priority: 11.08.2014 KR 20140103872
(43) Date of publication of application: 17.02.2016
(73) Proprietor: Samsung SDI Co., Ltd., Yongin-si, Gyeonggi-do (KR)
(72) Inventor: BYUN, In-Seop, Gyeonggi-do (KR); CHOI, Wan-Uk, Gyeonggi-do (KR); LEE, Jea-Woan, Gyeonggi-do (KR); KIM, Tae-Gon, Gyeonggi-do (KR); KIM, Joon-Sup, Gyeonggi-do (KR); LIM, Young-Chang, Gyeonggi-do (KR); KIM, Hye-Won, Gyeonggi-do (KR)
(74) Representative: Walaski, Jan Filip

(56) References cited:
- EP-A1- 2 266 744
- WO-A1-2013/105361
- US-A1- 2012 196 173
- US-A1- 2014 087 245

## Description

The present invention relates to an ultrasonic welding device, a method for manufacturing a rechargeable battery using an ultrasonic welding device, and a rechargeable battery.

The popularity and use of mobile devices has increased the demand for rechargeable batteries of all types, including but not limited to cylindrical, prismatic, and pouch types of batteries.

A pouch type of rechargeable battery includes an electrode assembly in a pouch. An electrode lead coupled to an uncoated region of the electrodes may extend from the pouch, and electrode tabs may be welded to electrode leads. The electrode leads and electrode tabs may be interconnected by ultrasonic welding. The positive electrode lead may be formed of aluminum and may serve as a positive electrode current collector. The negative electrode lead may be formed of copper, and may serve as a negative electrode current collector.

Because the positive and negative leads are formed of different materials, a condition for welding the positive electrode tab to the positive electrode lead is different from a condition for welding the negative electrode tab to the negative electrode lead. However, an ultrasonic welding device uses horns having the same structure. As a result, even when welding conditions are different, a process for welding the positive electrode tab to the positive electrode lead and a process for welding the negative electrode tab to the negative electrode lead are separately performed.

In addition, in a pouch-type of rechargeable battery, even if the positive and negative electrode leads are spaced from one another and protrude in parallel, separate processes are required to respectively weld the positive and negative electrode tabs to the positive and negative electrode leads while the horn is being moved. This increases welding time.

In addition, different conditions are configured in the ultrasonic welding device to weld the positive and negative electrode tabs to the positive and negative electrode leads. This complicates the welding process, and thus the overall manufacturing method of the rechargeable battery.

US2014087245 discloses an ultrasonic welding apparatus and a secondary battery. The secondary battery includes an electrode assembly in which a cathode plate provided with a cathode tab, an anode plate provided with an anode tab, and a separator are stacked in turn; a pouch for receiving the electrode assembly; a cathode lead electrically coupled to the cathode tab by welding; and an anode lead electrically coupled to the anode tab by welding.

In accordance with one embodiment, an ultrasonic welding device is provided as set out in claim 1. Preferred features are set out in claims 2 to 6.

The pressing pattern of the negative electrode horn may be less densely formed than the pressing pattern of the positive electrode horn. A pitch of the pressing pattern in the negative electrode horn may be between about 0.4 mm and about 0.8 mm, and a pitch of the pressing pattern in the positive electrode horn may be between about 0.1 mm to about 0.3 mm. Edge lines of the pressing pattern may be substantially parallel and perpendicular to a vibration direction in the negative and positive electrode horns.

Ends of the pressing pattern of the negative electrode horn may be more bluntly formed than ends of the pressing pattern of the positive electrode horn. Edge lines of the pressing patterns of the negative and positive electrode horns may be in different directions. Edge lines of the pressing pattern in the negative horn may be parallel and perpendicular to a vibration direction, and edge lines of the pressing pattern in the positive horn may be inclined at a predetermined angle with respect to the vibration direction.

In other words, the pyramids forming the patterns are oriented in the same direction in both the negative and positive electrode horns or are oriented in different directions in the negative and positive electrode horns.

In accordance with another embodiment, a method for manufacturing a rechargeable battery is set out in claim 7. Preferred features are set out in claims 8 and 9.

The cutting operation may include cutting the negative and positive electrode tabs with an ultrasonic welding device, while the negative and positive electrode tabs are connected by lamination tape. The disposing operation may include disposing the lamination tape to overlap the negative and positive electrode tabs using the ultrasonic welding device. The ultrasonic welding device may be used to ultrasonically weld the negative and positive electrode horns, and the negative and positive electrode horns may have pressing patterns of different densities. The ultrasonic welding device may be used to ultrasonically weld the negative and positive electrode horns, and the negative and positive horns may include corner lines of pressing patterns in different directions.

Features will become apparent to those of skill in the art by describing in detail exemplary embodiments with reference to the attached drawings in which:
FIG. 1 illustrates an embodiment of an ultrasonic welding device;
FIG. 2 illustrates an example of a state immediately before electrode tabs are welded by the ultrasonic welding device;
FIG. 3 illustrates an embodiment of a horn of the ultrasonic welding device;
FIG. 4 illustrates an embodiment of a rechargeable battery;
FIG. 5 illustrates another view of the rechargeable battery;
FIG. 6A illustrates operations included in one embodiment of a method for manufacturing a rechargeable battery, and FIG. 6B illustrates an embodiment of electrode tabs and lamination tape;
FIG. 7 illustrates an example of a state in which the electrode tabs are disposed at the electrode leads after the state in FIG. 2;
FIG. 8 illustrates an example of a state in which welding is performed by the ultrasonic welding device after the state in FIG. 7;
FIG. 9 illustrates another embodiment of a horn of an ultrasonic welding device; and
FIG. 10 illustrates an example of a state in which electrode tabs are welded to electrode leads by the ultrasonic welding device in FIG. 9.

Example embodiments are described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art. In the drawings, the dimensions of layers and regions may be exaggerated for clarity of illustration. Like reference numerals refer to like elements throughout.

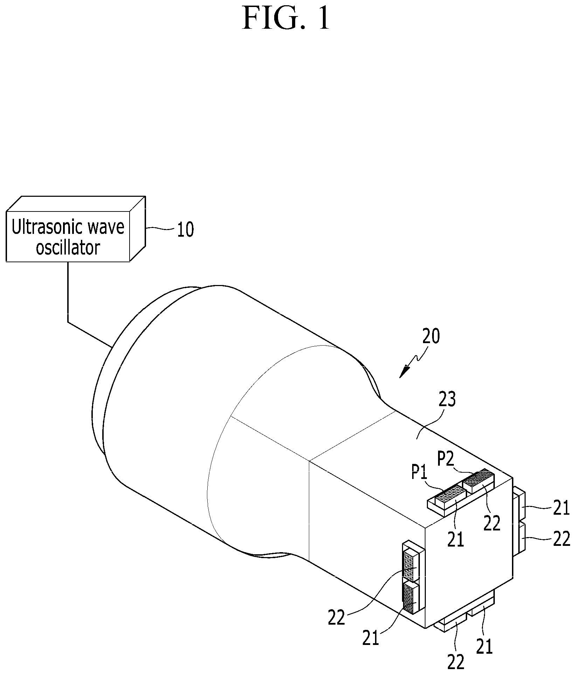

FIG. 1 illustrates an embodiment of an ultrasonic welding device which includes an ultrasonic wave oscillator 10 for generating ultrasonic waves, and a horn 20 coupled to the ultrasonic wave oscillator 10 to perform ultrasonic welding. As an example, the ultrasonic wave oscillator 10 converts a 60 Hz AC current into a 20 kHz or above high-frequency current, converts electrical energy to ultrasonic waves that are mechanical energy, and amplifies the ultrasonic waves for transmission to the horn 20.

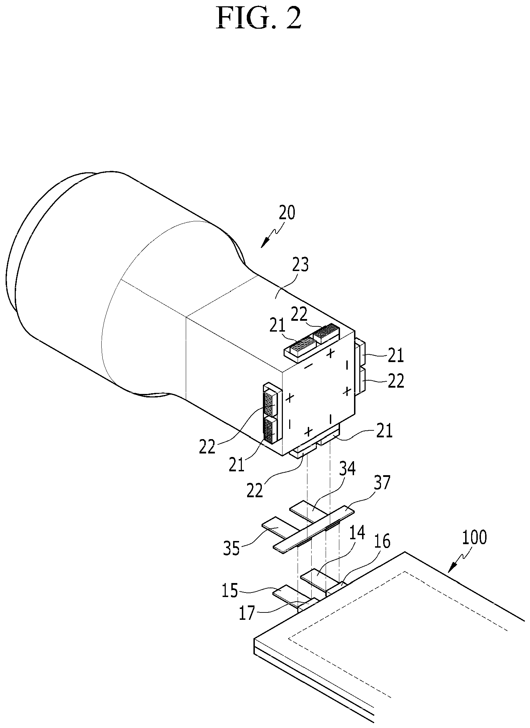

FIG. 2 illustrates an example of a state immediately before electrode tabs are welded by the ultrasonic welding device in FIG. 1. Referring to FIGS. 1 and 2, while being coupled to the ultrasonic wave oscillator 10, the horn 20 performs ultrasonic welding by disposing electrode tabs (e.g., negative electrode tab 34 and positive electrode tab 35) on electrode leads (e.g., negative electrode lead 14 and positive electrode lead 15) of the rechargeable battery 100 and pressing them.

The horn 20 has a negative electrode horn 21 and a positive electrode horn 22 that respectively press the negative electrode tab 34 and positive electrode tab 35. The negative and positive electrode horns 21 and 22 may be integrally formed with, or otherwise coupled to, a body 23, and may respectively have pressing patterns P1 and P2 of different shapes.

The body 23 has a predetermined (e.g., square pillar) shape, and the negative and positive electrode horns 21 and 22 are formed on four sides of the body 23. In other embodiments, the body 23 may have a different shape. For example, when the negative and positive electrode horns 21 and 22 at one side are abraded, the negative and positive electrode horns 21 and 22 at the other sides may be instantly used, because four pairs of the negative and positive electrode horns 21 and 22 are provided in the body 23. Accordingly, a time for replacement of the negative and positive electrode horns 21 and 22 may be reduced.

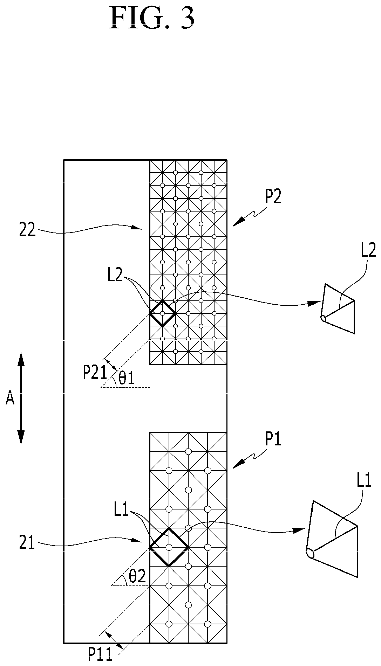

FIG. 3 illustrates an embodiment of a horn structure, which, for example, may correspond to the horn 20 in the ultrasonic welding device of FIG. 1. Referring to FIG. 3, in this embodiment, the pressing patterns P1 of the negative electrode horn 21 are less densely formed than the pressing patterns P2 of the positive electrode horns 22. For example, a pitch P11 of the pressing pattern P1 in the negative electrode horn 21 may be formed between 0.4 mm and 0.8 mm, and a pitch P21 of the pressing pattern P2 in the positive electrode horn 22 may be formed between 0.1 mm and 0.3 mm.

The negative electrode lead 14 may include copper (Cu) and the positive electrode lead 15 may include aluminum (Al). In other embodiments, different metals may be used. Because the electrode leads 14 and 15 include different metals, the positive electrode lead 15 may have lower strength and, thus, may be more easily damaged than the negative electrode lead 14.

Because the pressing patterns P2 of the positive electrode horn 22 are more densely formed than the pressing patterns P1 of the negative electrode horn 21, the positive electrode lead 15 may be less vulnerable to rupturing, and may be adhered to a horn anvil when ultrasonically welded, compared with the negative electrode lead 14.

In this embodiment, the negative and positive electrode horns 21 and 22 are formed in a quadrangular pyramidal shape, for example square or rectangular pyramids. In this case, the pyramids in the negative and positive electrode horns are oriented in the same direction. For example, the pyramids can be said to be oriented at a first angle θ1 in pattern P2 and a second angle θ2 in pattern P1. In this embodiment, θ1 and θ2 are the same. In other embodiments, they may be different so that the pyramids are oriented at different angles to one another.

Also, in other embodiments, the horns 21 and 22 may have different shapes, or one of the horns may have a shape different from the other horn. Also, while pattern P2 is shown to be denser than pattern P1, the pattern P1 may be denser than pattern P2 in another embodiment, where the positive and negative electrode leads are switched around.

Also, in one embodiment, ends of the pressing patterns P2 of the positive electrode horn 22 may be more bluntly formed than those of the pressing patterns P1 of the negative electrode horn 21. For example, the ends of the pressing pattern P1 of the negative electrode horn 21 may be more sharply formed than those of the pressing patterns P2 of the positive electrode horn 22. Thus, the positive electrode lead 15 that includes aluminum (Al), and thus has weaker strength, has a lesser possibility of being torn than the negative electrode lead 14 formed of copper (Cu) when ultrasonically welded.

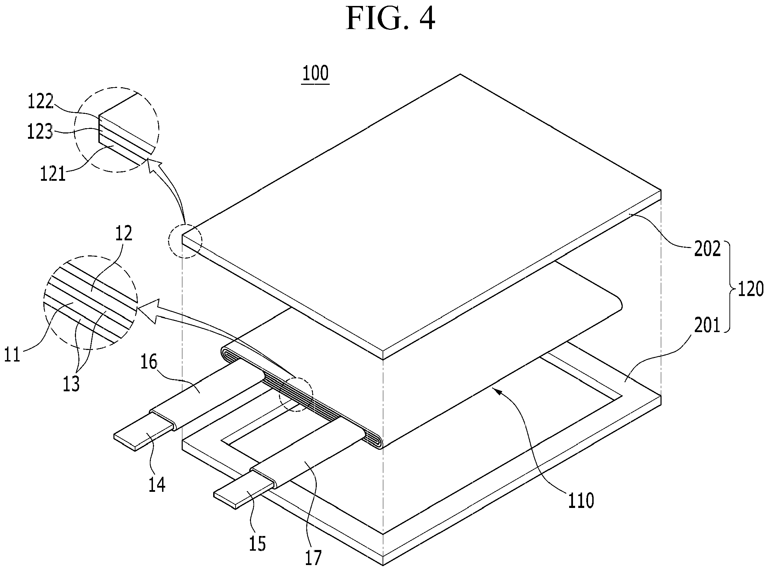

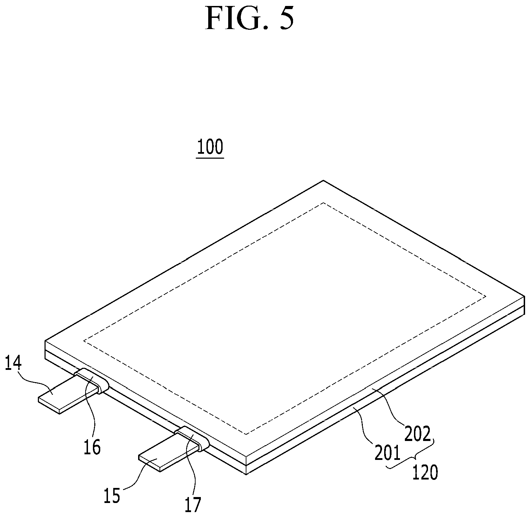

FIGS. 4 and 5 illustrate an embodiment of a rechargeable battery 100 which includes a pouch 120 for accommodating an electrode assembly 110. The electrode assembly 110 may have a thin jelly-roll form which includes a first electrode 11 (e.g., a negative electrode) and a second electrode 12 (e.g., a positive electrode) with an interposing separator 113. The first and second electrodes 11 and 12 and the separator may be would a predetermined number of times. The separator 13 may be or include, for example, a polymer film through which lithium ions pass.

The electrode assembly 110 includes a first electrode lead 14 (e.g., a negative electrode lead) and a second electrode lead 15 (e.g., a positive electrode lead) that are respectively coupled to the negative and positive electrodes 11 and 12.

The negative electrode 11 includes a coated region and an uncoated region. The coated region includes an active material which is coated on current collectors made of a thin metal plate. The uncoated region includes an active material which is not coated. The current collector of the negative electrode 11 and the negative electrode lead 34 may include, for example, copper (Cu).

The positive electrode 12 includes a coated region and an uncoated region. The coated region includes an active material different from the active material of the negative electrode 11 coated on current collectors and may be made of a thin metal plate. The uncoated region includes an active material is not coated. The current collector of the positive electrode 12 and the positive electrode lead 35 may include, for example, aluminum (Al).

The negative electrode lead 14 is coupled to the uncoated region of the negative electrode 11. The positive electrode lead 15 is spaced apart from the negative electrode lead 14 and is coupled to the uncoated region of the positive electrode 12. The negative and positive electrode leads 14 and 15 may be drawn out of the same lateral side of the electrode assembly 10 (e.g., to the left of FIGS. 1 and 2) and may be separately disposed at this location. The negative and positive electrode leads may be respectively disposed at opposite lateral sides of the electrode assembly (e.g., to the left and right of FIGS. 1 and 2)

The rechargeable battery 100 is formed by placing the electrode assembly 110 into the pouch 120 and then bonding (e.g., thermo-bonding) an outer portion of the electrode assembly 110. In this case, the negative and positive electrode leads 14 and 15 are enclosed by insulating members 16 and 17 and are drawn out of the pouch 120 through the thermo-bonded portion. For example, the insulating members 16 and 17 electrically insulate the negative electrode lead 14 from the positive electrode lead 15 and the negative and positive electrode leads 14 and 15 from the pouch 120.

The pouch 120 may have a multi-layered sheet structure for enclosing an exterior of the electrode assembly 110. For example, the pouch 120 may include a polymer sheet 121 that forms an inner side and performs insulating and thermo-bonding functions, a PET (polyethylene terephthalate) sheet that forms an outer side and performs a protecting function, a nylon sheet or a PET-nylon composite sheet 122 (for convenience, a "nylon sheet" will be exemplarily described), and a metal sheet 123 provided for mechanical strength. The metal sheet 123 is between the polymer sheet 121 and the nylon sheet 122, and may include, for example, aluminum.

The pouch 120 includes a first exterior member 201 that accommodates the electrode assembly 110, and a second exterior member 202 that covers the electrode assembly 110 and is thermo-bonded to the first exterior member 201 outside of the electrode assembly 110. The first and second exterior members 201 and 202 may be formed of the polymer sheet 121, the nylon sheet 122, and the metal sheet 123, which have the same layered structure. For example, the first exterior member 201 may be concavely formed to accommodate the electrode assembly 110, and the second exterior member 202 may be flatly formed to cover the electrode assembly 110 that is accommodated in the first exterior member 201. The second exterior member may be coupled to the first exterior member.

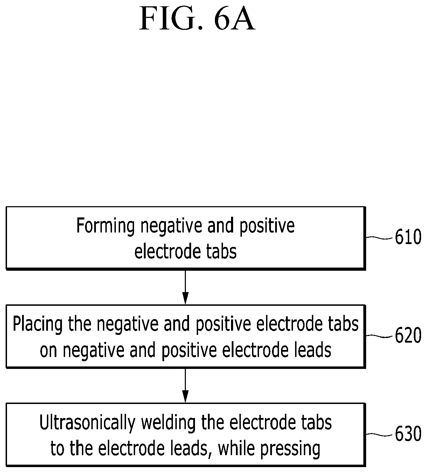

FIG. 6A illustrates operations included in one embodiment of a method for manufacturing a rechargeable battery using an ultrasonic welding device, which, for example, may be the ultrasonic welding device according to any of the aforementioned embodiments.

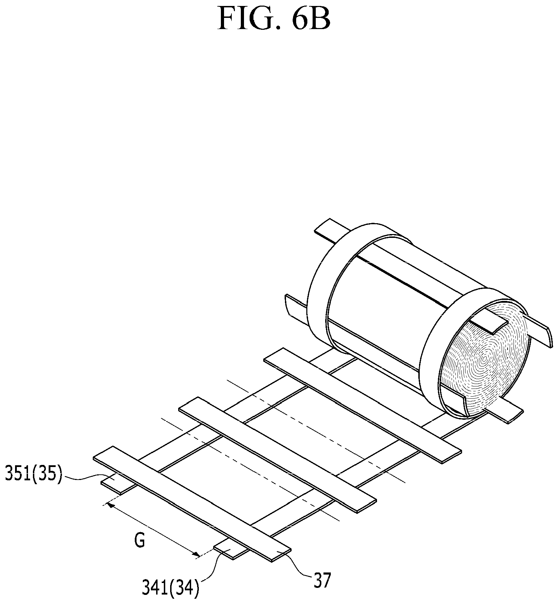

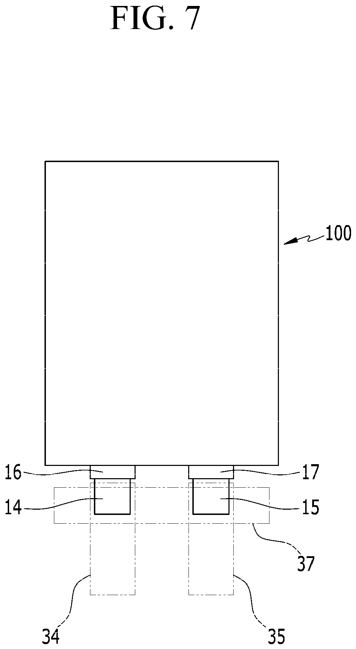

The method includes cutting intermediate materials 341 and 351 into negative and positive electrode tabs 34 and 35 (operation 610), as illustrated in FIG. 6B. A second operation includes disposing the negative and positive electrode tabs 34 and 35 in an overlapping relationship on the negative and positive electrode leads 14 and 15 (operation 620), as illustrated in FIG. 7.

A third operation includes ultrasonically welding the negative and positive electrode tabs 34 and 35 to the negative and positive electrode leads 14 and 15, while pressing the negative and positive electrode tabs 34 and 35 on the negative and positive electrode horns 21 and 22 (operation 630).

FIG. 6B illustrates the electrode tabs 34 and 35 and lamination tape 37 to be welded to the electrode leads of the rechargeable battery of FIG. 5 using the ultrasonic welding device of FIG. 1. Referring to FIG. 6B, the intermediate materials 341 and 351 of the negative and positive electrode tabs 34 and 35, which are to be welded to the negative and positive electrode leads 14 and 15, are illustrated along with the lamination tape 37.

The intermediate materials 341 and 351 of the negative and positive electrode tabs 34 and 35 are continuously supplied, while being coupled to each other through the lamination tape 37. During this process, an interval G is maintained between the intermediate materials 341 and 342 of the negative and positive electrode tabs 34 and 35, which correspond to the negative and positive electrode leads 14 and 15. The intermediate materials 341 and 351 are cut to have predetermined lengths that correspond to the negative and positive electrode tabs 34 and 35, as explained with reference to operation 610 in FIG. 6A.

In operation 610, the negative and positive electrode tabs 34 and 35 are cut while the negative and positive electrode tabs 34 and 35 are connected through the lamination tape 37. The lamination tape 37 makes handling of the negative and positive electrode tabs 34 and 35 easier, by preventing the negative and positive electrode tabs 34 and 35, which are cut from the intermediate materials 341 and 351, from separating from each other.

In addition, when the rechargeable battery 100 has a predetermined size (e.g., 1 x 1 cm), the interval G of the negative and positive electrode leads 14 and 15 is very small, e.g., less than 1 cm. This may allow the negative and positive electrode tabs 34 and 35 to be welded to the negative and positive electrode leads 14 and 15 through a single process.

FIG. 7 illustrates an example of a state in which the electrode tabs 34 and 35 are disposed at the electrode leads 14 and 15 after the state in FIG. 2. Referring to FIG. 7, the negative and positive electrode tabs 34 and 35 are respectively disposed to overlap the negative and positive electrode leads 14 and 15 of the rechargeable battery 100, as explained with reference to operation 620 in FIG. 6A. In this operation, the lamination tape 37 is disposed to overlap the negative and positive electrode tabs 34 and 35, which respectively overlap the negative and positive electrode leads 14 and 15.

Referring to FIGS. 2 to 7, the negative and positive electrode tabs 34 and 35 that overlap the negative and positive electrode leads 14 and 15 are ultrasonically welded, while being pressed by the negative and positive electrode horns 21 and 22 integrally formed in the ultrasonic welding device, as explained with reference to operation 630 in FIG. 6A.

In this operation, ultrasonic welding is performed using the negative and positive electrode horns 21 and 22 that are integrally provided in the body 23, which has the pressing patterns P1 and P2 of different shapes. As an example, pressure delivered to the negative and positive electrode leads 14 and 15 by the negative and positive electrode horns 21 and 22 is 0.05 MPa to 0.15 MPa, an amplitude is 40 % to 70 % of the maximum amplitude, a welding time is 0.04 s to 0.1 s, a pitch P11 of the pressing pattern P1 corresponding to the negative electrode tab 34 is 0.4 mm to 0.8 mm, and a pitch P21 of the pressing pattern P2 corresponding to the positive electrode tab 35 is 0.1 mm to 0.3 mm.

In one embodiment, the pressure may be 0.1 MPa, the amplitude may be 55 % of the maximum amplitude, the welding time may be 0.07 s, the pitch P11 of the pressing pattern P1 corresponding to the negative electrode tab 34 may be 0.6 mm, and the pitch P21 of the pressing pattern P2 corresponding to the positive electrode tab 35 may be 0.2mm.

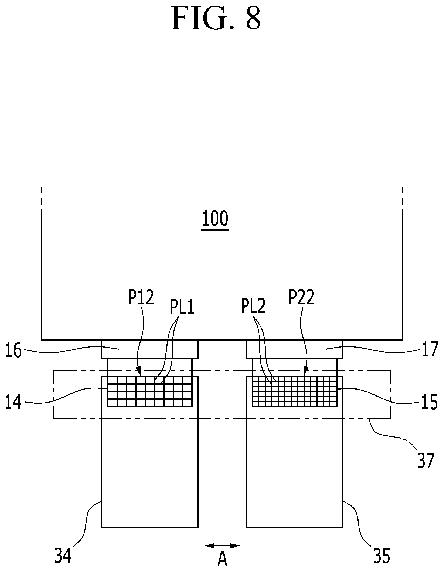

FIG. 8 illustrates an example of a state in which welding is performed by the ultrasonic welding device after the state in FIG. 7. Referring to FIGS. 3 and 8, the negative electrode lead 14 and the negative electrode tab 34 have negative electrode connecting patterns P12 for interconnecting one another, and the positive electrode lead 15 and the positive electrode tab 35 have a positive electrode connecting patterns P22 for interconnecting one another.

In the rechargeable battery 100, the negative electrode connecting patterns P12 are less densely formed than the positive electrode connecting patterns P22. In the negative and positive electrode connecting patterns P12 and P22, pattern lines PL1 and PL2 are parallel and perpendicular to a vibration direction. In addition, the negative and positive electrode leads 14 and 15 are interconnected by the lamination tape 37, and the negative and positive electrode connecting patterns P12 and P22 are coated with the lamination tape 37.

Thus, the manufacturing method of the rechargeable battery does not require an additional process of attaching the lamination tape 37 to the negative and positive electrode leads 14 and 15.

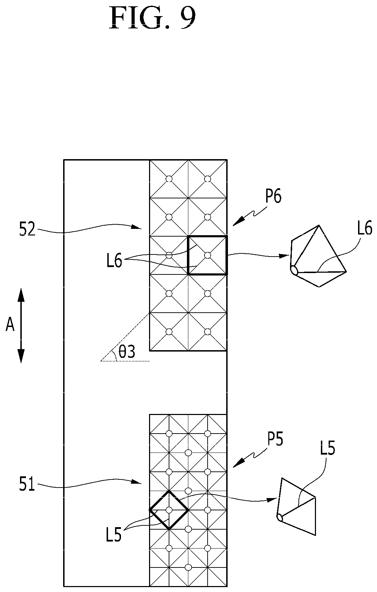

FIG. 9 illustrates another embodiment of a horn for an ultrasonic welding device according. Referring to FIG. 9, a negative electrode horn 51 and a positive electrode horn 52 have pyramids which are differently oriented. Thus, edge lines L5 and L6 (ie. ridges rising from the base to the apex) of the pyramids in the negative electrode horn 51 and in the positive electrode horn 52 are differently oriented. For example, the edge lines L5 of the pyramids of a pressing pattern P5 are parallel and perpendicular to the vibration direction A in the negative electrode horn 51, but the edge lines L6 of the pyramids of a pressing pattern P6 are inclined or oriented at a third angle θ3 in the positive electrode horn 52, as shown in Fig. 9.

Another embodiment of a manufacturing method of a rechargeable battery is similar to the previous method embodiment, except that ultrasonic welding is performed in the third operation using the negative and positive electrode horns 51 and 52 integrally provided in the body 23 and formed with the pyramids of the pressing patterns P5 and P6 in different directions.

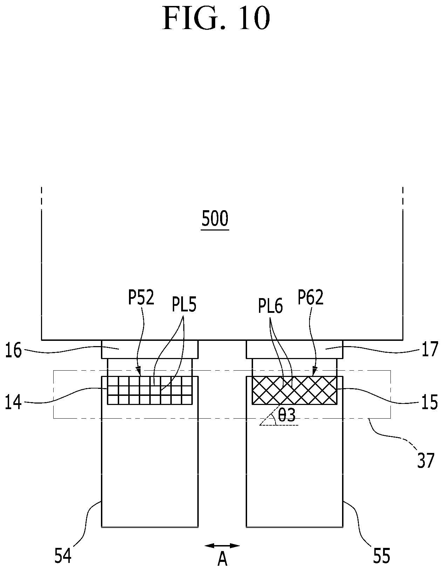

FIG. 10 illustrates an embodiment of electrode tabs welded to respective electrode leads by the ultrasonic welding device in FIG. 9. Referring to FIG. 10, in a rechargeable battery 500, a negative electrode connecting pattern P52 and a positive electrode connecting pattern P62 have pattern lines PL5 and PL6 in different directions. For example, in the negative electrode connecting pattern P52, the pattern lines PL5 are parallel and perpendicular to the vibration direction A. In the positive electrode connecting pattern P62, the pattern lines PL6 are inclined at the third angle θ3.

Because the negative electrode lead 14 includes copper (Cu) and the positive electrode lead 15 includes aluminum (Al), the positive electrode lead 15 having a lower strength may be more easily damaged than the negative electrode lead 14. In the positive electrode connecting pattern P62, because the pyramids are inclined at the third angle θ3, the positive electrode lead 15 may be more easily prevented from being torn when ultrasonically welded, compared with the negative electrode lead 14.

Example embodiments have been disclosed herein, and although specific terms are employed, they are used and are to be interpreted in a generic and descriptive sense only and not for purpose of limitation. In some instances, as would be apparent to one of skill in the art as of the filing of the present application, features, characteristics, and/or elements described in connection with a particular embodiment may be used singly or in combination with features, characteristics, and/or elements described in connection with other embodiments unless otherwise indicated. Accordingly, it will be understood by those of skill in the art that various changes in form and details may be made without departing from the scope of the present invention as set forth in the following claims.

## Claims

1. An ultrasonic welding device, comprising:
an ultrasonic wave oscillator (10) to generate ultrasonic waves; and
a horn structure (20) coupled to the ultrasonic wave oscillator and configured to perform ultrasonic welding by respectively disposing a negative electrode tab (34) and a positive electrode tab (35) on a negative electrode lead (14) and a positive electrode lead (15) of a rechargeable battery while pressure is applied, wherein:
the horn structure includes a negative electrode horn (21) and a positive electrode horn (22) that respectively press the negative electrode tab and the positive electrode tab, and
the negative and positive electrode horns are integrally provided in a body and have pressing patterns of different shapes, and
wherein the pressing patterns comprise pyramids;
wherein the body has a substantially square pillar shape, and one pair of positive and negative electrode horns is disposed on each of the four sides of the body.

2. The device as claimed in claim 1, wherein the pressing pattern of the negative electrode horn is less densely formed than the pressing pattern of the positive electrode horn.

3. The device as claimed in claim 2, wherein:
the pitch of the pressing pattern in the negative electrode horn is between 0.4 mm and about 0.8 mm, and
the pitch of the pressing pattern in the positive electrode horn is between 0.1 mm to about 0.3 mm.

4. The device as claimed in any one of claims 1 to 3, wherein the pyramids are oriented in the same direction in both the negative and positive electrode horns.

5. The device as claimed in any one of claims 1 to 3, wherein the pyramids are oriented in different directions in the negative and positive electrode horns.

6. The device as claimed in any one of the preceding claims, wherein ends of the pressing pattern of the positive electrode horn are more bluntly formed than ends of the pressing pattern of the negative electrode horn.

7. A method of manufacturing a rechargeable battery, comprising:
cutting a continuously provided intermediate material into a negative electrode tab (34) and a positive electrode tab (35);
respectively disposing the negative and positive electrode tabs to overlap a negative electrode lead (14) and a positive electrode lead (15) of the rechargeable battery; and
ultrasonically welding the overlapped negative and positive electrode tabs with an ultrasonic welding device according to claim 1 while pressing the overlapped negative and positive electrode tabs with a negative electrode horn and a positive electrode horn integrally formed, and
wherein the negative and positive electrode horns have pressing patterns comprising pyramids.

8. The method as claimed in claim 7, wherein the cutting includes:
cutting the negative and positive electrode tabs with an ultrasonic welding device, while the negative and positive electrode tabs are connected by lamination tape (37), wherein the disposing may include:
disposing the lamination tape to overlap the negative and positive electrode tabs using the ultrasonic welding device.

9. The method as claimed in claim 8, wherein the ultrasonic welding device is used to ultrasonically weld the negative and positive electrode horns, the negative and positive electrode horns having pressing patterns of different densities and/or wherein the pressing patterns are oriented in different directions.

## Patentansprüche

1. Ultraschallschweißvorrichtung, umfassend:
einen Ultraschalloszillator (10), um Ultraschallwellen zu erzeugen; und
eine Homstruktur (20), die mit dem Ultraschalloszillator gekoppelt und dazu ausgestaltet ist, Ultraschallschweißen auszuführen, indem bei Anwendung eines Drucks jeweils ein negativer Elektrodenstreifen (34) und ein positiver Elektrodenstreifen (35) auf einer negativen Elektrodenleitung (14) und einer positiven Elektrodenleitung (15) einer wiederaufladbaren Batterie angeordnet wird, wobei:
die Hornstruktur ein negatives Elektrodenhorn (21) und ein positives Elektrodenhorn (22) enthält, welche jeweils Druck auf den negativen Elektrodenstreifen und den positiven Elektrodenstreifen anwenden, und
das negative und das positive Elektrodenhorn einstückig in einem Körper bereitgestellt sind und ihre Andruckmuster unterschiedliche Formen aufweisen, und
wobei die Andruckmuster Pyramiden umfassen;
wobei der Körper die Form einer im Wesentlichen quadratischen Säule aufweist und an jeder der vier Seiten des Körpers ein Paar positiver und negativer Elektrodenhörner angeordnet ist.

2. Vorrichtung nach Anspruch 1, wobei das Andruckmuster des negativen Elektrodenhorns weniger dicht ausgebildet ist als das Andruckmuster des positiven Elektrodenhorns.

3. Vorrichtung nach Anspruch 2, wobei:
das Abstandsmaß des Andruckmusters in dem negativen Elektrodenhorn zwischen 0,4 mm und ungefähr 0,8 mm liegt und
das Abstandsmaß des Andruckmusters in dem positiven Elektrodenhorn zwischen 0,1 mm und ungefähr 0,3 mm liegt.

4. Vorrichtung nach einem der Ansprüche 1 bis 3, wobei die Pyramiden im negativen und im positiven Elektrodenhorn in derselben Richtung ausgerichtet sind.

5. Vorrichtung nach einem der Ansprüche 1 bis 3, wobei die Pyramiden im negativen und im positiven Elektrodenhorn in verschiedenen Richtungen ausgerichtet sind.

6. Vorrichtung nach einem der vorangehenden Ansprüche, wobei Enden des Andruckmusters des positiven Elektrodenhorns stumpfer ausgebildet sind als Enden des Andruckmusters des negativen Elektrodenhorns.

7. Verfahren zur Herstellung einer wiederaufladbaren Batterie, umfassend:
Zerschneiden eines kontinuierlich bereitgestellten Zwischenprodukts in einen negativen Elektrodenstreifen (34) und einen positiven Elektrodenstreifen (35);
Anordnen jeweils des negativen und des positiven Elektrodenstreifens, sodass sie eine negative Elektrodenleitung (14) und eine positive Elektrodenleitung (15) der wiederaufladbaren Batterie überlappen; und
Ultraschallverschweißen der überlappten negativen und positiven Elektrodenstreifen mit einer Ultraschallschweißvorrichtung nach Anspruch 1, während die überlappten negativen und positiven Elektrodenstreifen durch ein negatives Elektrodenhorn und ein positives Elektrodenhorn, die einstückig ausgebildet sind, angedrückt werden, und
wobei das negative und das positive Elektrodenhorn Andruckmuster aufweisen, die Pyramiden umfassen.

8. Verfahren nach Anspruch 7, wobei das Zerschneiden beinhaltet:
Schneiden der negativen und positiven Elektrodenstreifen mit einer Ultraschallschweißvorrichtung, während die negativen und positiven Elektrodenstreifen durch Laminierband (37) verbunden sind, wobei das Anordnen Folgendes beinhalten kann:
Anordnen des Laminierbands mittels der Ultraschallschweißvorrichtung, sodass es die negativen und positiven Elektrodenstreifen überlappt.

9. Verfahren nach Anspruch 8, wobei die Ultraschallschweißvorrichtung zum Ultraschallverschweißen der negativen und positiven Elektrodenhörner verwendet wird, wobei die negativen und positiven Elektrodenhörner Andruckmuster unterschiedlicher Dichte aufweisen und/oder wobei die Andruckmuster in verschiedenen Richtungen ausgerichtet sind.

## Revendications

1. Dispositif de soudage par ultrasons, comprenant :
un oscillateur d'onde ultrasonore (10) pour générer des ondes ultrasonores ; et
une structure de bras (20) couplée à l'oscillateur d'onde ultrasonore et configurée pour effectuer un soudage par ultrasons en disposant respectivement une languette d'électrode négative (34) et une languette d'électrode positive (35) sur un conducteur d'électrode négative (14) et un conducteur d'électrode positive (15) d'une batterie rechargeable alors qu'une pression est appliquée, dans lequel :
la structure de bras comprend un bras d'électrode négative (21) et un bras d'électrode positive (22) qui pressent respectivement la languette d'électrode négative et la languette d'électrode positive, et
les bras d'électrodes négative et positive sont prévus intégralement dans un corps et ont des motifs de pression de formes différentes, et
dans lequel les motifs de pression comprennent des pyramides ;
dans lequel le corps a une forme de pilier sensiblement carré, et une paire de bras d'électrodes positive et négative est disposée sur chacun des quatre côtés du corps.

2. Dispositif selon la revendication 1, dans lequel le motif de pression du bras d'électrode négative est formé moins densément que le motif de pression du bras d'électrode positive.

3. Dispositif selon la revendication 2, dans lequel :
le pas du motif de pression dans le bras d'électrode négative est entre 0,4 mm et environ 0,8 mm, et
le pas du motif de pression dans le bras d'électrode positive est entre 0,1 mm et environ 0,3 mm.

4. Dispositif selon l'une quelconque des revendications 1 à 3, dans lequel les pyramides sont orientées dans la même direction dans les deux bras d'électrodes négative et positive.

5. Dispositif selon l'une quelconque des revendications 1 à 3, dans lequel les pyramides sont orientées dans des directions différentes dans les bras d'électrodes négative et positive.

6. Dispositif selon l'une quelconque des revendications précédentes, dans lequel les extrémités du motif de pression du bras d'électrode positive sont formées de manière moins pointue que les extrémités du motif de pression du bras d'électrode négative.

7. Procédé de fabrication d'une batterie rechargeable, comprenant les étapes consistant à :
découper un matériau intermédiaire fourni de manière continue en une languette d'électrode négative (34) et une languette d'électrode positive (35) ;
disposer les languettes d'électrodes négative et positive respectivement de manière à recouvrir un conducteur d'électrode négative (14) et un conducteur d'électrode positive (15) de la batterie rechargeable ; et
souder par ultrasons les languettes d'électrodes négative et positive superposées avec un dispositif de soudage par ultrasons selon la revendication 1 tout en pressant les languettes d'électrodes négative et positive superposées avec un bras d'électrode négative et un bras d'électrode positive formés d'un seul tenant, et
dans lequel les bras d'électrodes négative et positive ont des motifs de pression comprenant des pyramides.

8. Procédé selon la revendication 7, dans lequel la découpe comprend :
la découpe des languettes d'électrodes négative et positive avec un dispositif de soudage par ultrasons, alors que les languettes d'électrodes négative et positive sont connectées par une bande de laminage (37),
dans lequel la disposition peut comprendre :
la disposition de la bande de laminage de manière à recouvrir les languettes d'électrodes négative et positive en utilisant le dispositif de soudage par ultrasons.

9. Procédé selon la revendication 8, dans lequel le dispositif de soudage par ultrasons est utilisé pour souder par ultrasons les bras d'électrodes négative et positive, les bras d'électrodes négative et positive ayant des motifs de pression de densités différentes et/ou dans lequel les motifs de pression sont orientés dans des directions différentes.
